# EUROPÄISCHE PATENTSCHRIFT

(11) **EP 2 225 953 B1**
(45) Veröffentlichungstag und Bekanntmachung des Hinweises auf die Patenterteilung: **11.11.2015**
(21) Anmeldenummer: 10155354.3
(22) Anmeldetag: 03.03.2010
(51) Int. Cl.: A23G 1/18, A23G 1/00

(54) **Temperiermaschine zum kontinuierlichen Aufbereiten von fetthaltigen Massen mit konstantem Temperiergrad**
Tempering machine for continuous preparing of fatty masses with constant tempering level
Machine d'équilibrage des températures destinée au traitement continu de masses contenant des graisses avec un degré d'équilibrage des températures constant

(30) Priorität: 05.03.2009 DE 102009011969
(43) Veröffentlichungstag der Anmeldung: 08.09.2010
(73) Patentinhaber: Sollich KG, 32105 Bad Salzuflen (DE)
(72) Erfinder: Bläsing, Rüdiger, 33613, Bielefeld (DE); Laut, Reinhard, 32479, Hille (DE)
(74) Vertreter: Rehberg, Bernhard Frank

(56) Entgegenhaltungen:
- EP-A1- 0 521 205
- EP-A1- 1 149 536
- DE-A1-102004 021 135
- GB-A- 2 186 476
- GB-A- 2 339 381
- US-A- 3 154 137
- US-A1- 2005 087 078

## Beschreibung

### TECHNISCHES GEBIET DER ERFINDUNG

Die Erfindung betrifft ein Verfahren und eine Temperiermaschine zur Regelung der Kristallisation bei dem kontinuierlichen Aufbereiten von zu verarbeitenden fetthaltigen Massen, insbesondere Schokolademasse.

Ein solches kontinuierliches Aufbereiten wird oft auch als Temperieren bezeichnet. Dabei kommt es darauf an, die Masse insbesondere temperaturmäßig so zu beeinflussen, insbesondere zunächst zu kühlen und anschließend wiederzuerwärmen, dass sich eine hinreichend große Anzahl möglichst stabiler Kristalle bildet. Die Bildung bzw. Zurverfügungstellung von Kristallen kann dabei in einer Temperiermaschine erfolgen. Es ist aber auch möglich, die Kristalle anderweitig zu bilden und als Impfkristalle einer Masse hinzuzufügen.

### STAND DER TECHNIK

Bisher sind Temperiermaschinen so aufgebaut, dass einzelne Regler, insbesondere PID-Regler, für die Temperaturen und Mengen der Kühlmedien und der Masse vorgesehen sind, wobei diese Regler so ausgebildet sind, dass der jeweils eingestellte Wert, also beispielsweise die Eingangstemperatur des im Gegenstrom geführten Kühlmediums am Ende der Kühlstufe, konstant gehalten wird. Insoweit sind etwa 3 bis 12 Regler vorgesehen, die einzeln in Abstimmung aufeinander so eingestellt werden müssen, dass das gewünschte Ergebnis, nämlich eine gut temperierte Masse, entsteht. Solche Temperiermaschinen sind im Einzelnen in der DE 40 27 429 C2 beschrieben.

Bei einer zweiten Art von Temperiermaschinen werden Impfkristalle gebildet, die der flüssigen Masse zudosiert werden. Einzelheiten dieser Temperiermaschine sind beispielsweise in der EP 1 249 174 B1 beschrieben.

Schließlich gibt es noch andere Arten von Temperiermaschinen, sei es in liegender oder stehender Anordnung der Elemente der Temperiermaschine.

Aus der europäischen Patentanmeldung EP 1 149 536 A1 ist ein Verfahren zum kontiniuerlichen Aufbereiten einer zu verarbeitenden fetthaltigen Masse, insbesondere Schokolademasse, bekannt, wobei der Temperiergrad der Schokolademasse gemessen wird. Die Kühlung der Schokolademasse wird dann so eingestellt, dass ein bestimmter Temperiergrad erreicht wird.

Aus der britischen Patentanmeldung GB 2 186 476 A ist ein Verfahren zum kontinuierlichen Aufbereiten einer zu verarbeitenden fetthaltigen Masse, insbesondere Schokolademasse, bekannt, bei dem die Viskosität der Schokolademasse überwacht wird. In Abhängigkeit von der festgestellten Viskosität wird die Kühlung der Schokolademasse beeinflusst/eingestellt/ gesteuert/geregelt ("controlled").

Aus der deutschen Patentanmeldung DE 10 2004 021 135 A1 ist eine Vorrichtung zum Erfassen von Kristallisations-Erstarrungskurven von Schokolademassen und ähnlichen Fettmassen bekannt. Mittels der Vorrichtung kann der Temperiergrad einer flüssigen Schokolademasse oder einer ähnlichen Fettmasse gemessen und bestimmt werden.

Bei den bisher bekannten Verfahren und Vorrichtungen zur Regelung der Kristallisation bei dem kontinuierlichen Aufbereiten einer zu verarbeitenden fetthaltigen Masse besteht das Problem darin, dass der Bediener die einzelnen Regler in Abstimmung aufeinander so einstellen muss, dass der gewünschte Temperiergrad resultiert. Er kann dabei im Wesentlichen nur die Temperaturen der Temperiermedien und der Masse sowie die Mengen der Temperiermedien und der Masse einstellen. Ein solcher Einstellvorgang erfordert eine große Erfahrung der Bedienungsperson, um eine Masse mit dem gewünschten Temperiergrad zu erhalten, wobei es auch darauf ankommt, dass die Masse in der gewünschten Menge und mit der gewünschten Temperatur anfällt, wie sie für die Weiterverarbeitung benötigt wird.

Die Regler für die einzelnen Temperaturen und Mengen besitzen jeweils nur einen begrenzten Stellbereich. So ist leicht vorstellbar, dass ein nahezu vollständig geöffnetes oder vollständig geschlossenes Ventil bei einer weiteren Verstellung in diesem Bereich die durchgelassene Menge nur relativ wenig oder gar nicht beeinflusst. Bei den Reglern, mit denen die Temperaturen eingestellt werden, kann man dadurch an die Grenzen der Stellbereiche kommen, bei denen das Temperiermedium hinsichtlich einer verfügbaren Temperatur und lieferbaren Menge nicht mehr ausreicht, die gewünschte Regelung zu ermöglichen. Mit Hilfe der beschriebenen einstellbaren Regler wird zum Beispiel die Temperatur der Masse am Eingang der Temperiermaschine geregelt. Ein zweiter Regler wirkt sich auf die Temperatur der Masse am Ende der Kühlstufe aus. Ein dritter Regler regelt die Temperatur des Temperiermediums in der Kühlstufe. Ein vierter Regler ist für die Reglung der Temperatur des Temperiermediums der Nachwärmstufe vorgesehen. Weitere Regler können hinzukommen.

Zwar ist es bekannt, den Temperiergrad der temperierten Masse anschließend zu ermitteln. Dies kann durch Einrichtungen geschehen, die in der Leitung zwischen der Temperiermaschine und dem Verbraucher eingebaut sind, die also on-line messen. Eine andere Möglichkeit besteht darin, am Masseausgang einzelne Proben zu nehmen und diese Proben der temperierten Masse in mehr oder weniger regelmäßigen Abständen zu untersuchen.

Gleichwohl lässt sich der Temperiergrad bei den bisher bekannten Temperiermaschinen nicht einstellen, sondern nur die einzelnen Temperaturen und Mengen des Temperiermediums und der Masse in den einzelnen Stufen bzw. an den einzelnen Orten. Dabei ist es durchaus nicht eindeutig, dass durch eine Veränderung der Einstellung eines einzelnen Reglers mit einem anderen Sollwertparameter das erreichbare Ergebnis, nämlich der Temperiergrad der temperierten Masse, besser wird. Oft ist es deshalb erforderlich, die verschiedenen Regler in Abstimmung aufeinander jeweils anders einzustellen, um den Temperiergrad zu verbessern. Dabei gelangt man jedoch relativ schnell an die oben schon beschriebenen Grenzen des Stellbereiches eines Reglers, die man nicht überschreiten kann. In einem solchen Fall ist es erforderlich, den Sollwertparameter eines anderen Reglers so zu verstellen, dass der erste Regler einen mittleren oder jedenfalls gut nutzbaren Stellbereich einnehmen kann. Dabei müssen in der Regel mehrere Regler in Zuordnung zueinander eingestellt werden. Die richtige Einstellung einer Temperiermaschine wird daher in erheblichem Maße von der Fachkenntnis der Bedienungsperson und der Kenntnis der Zusammenhänge der einzelnen Regelgrößen beeinflusst. Hinzu kommt, dass die Eingangsbedingungen des Temperiermediums einerseits und der Masse andererseits in die Temperiermaschine Schwankungen unterworfen ist, sei es durch unterschiedliche Umgebungstemperaturen, sei es durch eine plötzliche Auffüllung eines der Temperiermaschine vorgeschalteten Versorgungstanks für die Masse, bei der eine große Menge Masse mit einer abweichenden Temperatur anfällt. Auch kann die Art der Masse schwanken, beispielsweise für eine helle oder eine dunkle Schokolade. Selbst bei gleicher Art von Masse kann der Fettgehalt der Masse von Charge zu Charge schwanken, was sich in einer Veränderung des Temperiergrads auswirkt.

### AUFGABE DER ERFINDUNG

Der Erfindung liegt die Aufgabe zugrunde, ein Verfahren und eine Temperiermaschine bereitzustellen, mit denen einfacher und zielführender als bisher eine fetthaltige Masse mit gewünschten Eigenschaften kontinuierlich aufbereitet werden kann.

### LÖSUNG

Die Aufgabe der Erfindung wird erfindungsgemäß mit den Merkmalen der unabhängigen Patentansprüche 1, 2, 7 bzw. 8 gelöst.

### BESCHREIBUNG DER ERFINDUNG

Das Verfahren zur Regelung der Kristallisation bei dem kontinuierlichen Aufbereiten einer zu verarbeitenden fetthaltigen Masse, insbesondere Schokolademasse, mit einer einzelne Regler für die Temperaturen und Mengen der Masse und der Temperiermedien aufweisenden Temperiermaschine, arbeitet mit folgenden Verfahrensschritten:
a) Eingeben eines gewünschten Temperiergradsollwerts in eine Regeleinrichtung,
b) Ermitteln des Temperiergradistwerts der temperierten Masse,
c) Vergleichen des ermittelten Temperiergradistwerts mit dem gewünschten Temperiergradsollwert,
d) Differenzbildung des Temperiergradsollwerts und des Temperiergradistwerts zur Gewinnung einer Auswahlgröße,
e) Bereitstellen eines oder mehrerer Sollwertparameter zur Ansteuerung der einzelnen Regler für Temperaturen und Mengen der Masse und der Temperiermedien in Abhängigkeit von der Auswahlgröße aus einem Prozessor,
f) Aufgeben der Sollwertparameter auf den oder die betreffenden Regler für die Temperaturen und die Mengen der Masse und der Temperiermedien,
g) Wiederholen der Schritte b) bis f) bis Übereinstimmung des gewünschten Temperiergradsollwerts mit dem ermittelten Temperiergradistwert.

Es ist aber auch möglich, die Funktion des Prozessors in Form einer oder mehrerer Auswahlmatrix und in der Regel mehrerer nachgeordneter Kennfelder zu realisieren. Dann arbeitet das Verfahren mit folgenden Verfahrensschritten:
a) Eingeben eines gewünschten Temperiergradsollwerts in eine Regeleinrichtung,
b) Auswählen einer Auswahlmatrix durch den Temperiergradregler der Regeleinrichtung in Abhängigkeit von der Auswahlgröße und damit von dem eingegebenen gewünschten Temperiergradsollwert,
c) Bereitstellen eines oder mehrerer Auswahlparameter durch die Auswahlmatrix in Abhängigkeit von der Auswahlgröße und damit von dem eingegebenen gewünschten Temperiergradsollwert,
d) Auswählen eines oder mehrerer Kennfelder durch die Auswahlmatrix in Abhängigkeit von der Auswahlgröße und damit von dem eingegebenen gewünschten Temperiergradsollwert,
e) Bereitstellen eines oder mehrerer Sollwertparameter zur Ansteuerung der einzelnen Regler für Temperaturen und Mengen der Masse und der Temperiermedien durch die Kennfelder in Abhängigkeit von dem oder den Auswahlparametern und damit von dem eingegebenen gewünschten Temperiergradsollwert,
f) Ermitteln des Temperiergradistwerts der temperierten Masse,
g) Vergleichen des ermittelten Temperiergradistwerts mit dem gewünschten Temperiergradsollwert,
h) Differenzbildung des Temperiergradsollwerts und des Temperiergradistwerts zur Gewinnung der Auswahlgröße,
i) Aufgeben der Sollwertparameter auf den oder die betreffenden Regler für die Temperaturen und die Mengen der Masse und der Temperiermedien,
i) Wiederholen der Schritte b) bis i) bis Übereinstimmung des gewünschten Temperiergradsollwerts mit dem ermittelten Temperiergradistwert.

Die erfindungsgemäße Regelung lässt sich auf alle zuvor genannten Temperiermaschinen anwenden.

Der Temperiergrad einer temperierten Masse ist eine dimensionslose Kennzahl. Es gibt verschiedene Möglichkeiten, und damit Vorgehensweisen, den Temperiergrad zu ermitteln. Eine dieser Möglichkeiten sind die Tempermeter, beispielsweise solche, wie sie in der DE 37 14 951 C1 oder auch der DE 10 2004 021 135 B4 beschrieben sind. Bei Verwendung dieser Vorrichtungen wird der Temperiergrad - manchmal auch als Temperierindex bezeichnet - ermittelt, der in einem Zahlenbereich von 1 bis 9 liegen kann. Bei dieser Art der Unterscheidung und Systematisierung des Temperiergrads handelt es sich um eine Möglichkeit, wie sie im Hause der Anmelderin angewendet und propagiert wird. Dies schließt nicht aus, dass es auch andere Möglichkeiten und Skalen gibt, eine Aussage über den Temperiergrad oder Temperierindex zu machen und bei der neuen Regelung als gewünschten Istwert zu verwenden.

Mit dem neuen Regelverfahren ist eine kontinuierliche Aufbereitung einer zu verarbeitenden fetthaltigen Masse mit konstantem Temperiergrad (Temperiergradsollwert) ohne Weiteres möglich, ohne dass zur Durchführung des Verfahrens spezielle Fachleute mit erheblicher Erfahrung notwendig sind. Abweichungen von dem eingestellten Temperiergrad werden kontinuierlich ausgeregelt. Die Bedienung einer Temperiermaschine wird somit erheblich vereinfacht.

Bei dem neuen Regelverfahren wird anstelle der komplizierten Einstellungen der einzelnen Regler für die Temperaturen und Mengen der Masse und der Temperiermedien, auch aufeinander, nur eine einzige Größe, nämlich der gewünschte Temperiergrad (Temperiergradsollwert) eingestellt. Diese Einstellung kann unterstützt werden durch zusätzliche Eingaben betreffend die Art der Masse, z. B. ob helle oder dunkle Schokolade, und/oder die Menge der pro Zeiteinheit zu temperierenden Masse. Das neue Regelverfahren lässt sich auf alle Arten von Temperiermaschinen anwenden, insbesondere auf solche Temperiermaschinen, die mit einer Kühlstufe, einer Kristallisationsstufe und einer Nachwärmstufe arbeiten. Aber auch Anwendungen auf Temperiermaschinen mit Kühlstufe und Verweilzone sind möglich. Schließlich kann auch eine Impfkristallisation auf diese Weise geregelt werden.

Es ist sinnvoll, am Eingang der Temperiermaschine konstante Eingangsbedingungen der Masse und der Temperiermedien bereitzustellen. Eine Schokolademasse sollte eine Temperatur von etwa 45 °C aufweisen. Auf diese Weise baut das Regelverfahren auf konstanten Eingangsbedingungen auf und die Regelung der Temperiermaschine wird entlastet bzw. einfacher. Am Eingang der Temperiermaschine kann zu diesem Zweck auch eine Dekristallisationszone vorgesehen sein.

Vorzugsweise werden die Grenzen der Stellbereiche der Regler für die Temperaturen und Mengen der Masse und der Temperiermedien überwacht. In Abhängigkeit von dem Annähern an oder Erreichen von Grenzen der Stellbereiche der Regler werden ein oder mehrere andere Kennfelder ausgewählt, die Sollwertparameter bereitstellen, die die Grenzen der Stellbereiche nicht tangieren und als Sollwertparameter den einzelnen Reglern für die Temperaturen und Mengen der Masse und der Temperiermedien zugeführt werden. So werden beispielsweise bei Ventilen, die den Durchsatz von Mengen der Masse und der Temperiermedien regeln, mittlere Stellbereiche bevorzugt, in denen eine Änderung der Ventileinstellung zu einer nennenswerten Änderung des Durchsatzes führt. Bei Reglern für die Temperaturen der Masse und/oder der Temperiermedien wird darauf geachtet, dass hinreichende Differenzen zwischen den Temperaturen der Masse und/oder der Temperiermedien einerseits und den Temperaturen der Temperierkreisläufe andererseits eingehalten werden.

Die von der Auswahlmatrix bereitgestellten Auswahlparameter werden mit der ermittelten Auswahlgröße des Temperiergradreglers beeinflusst. Die Auswahlparameter aus der Auswahlmatrix werden also mit der Auswahlgröße des Temperiergradreglers moduliert. Die Sollwertparameter nachgeordneter Kennfelder werden mit den jeweiligen Auswahlparametern aus der Auswahlmatrix und den Stellgrößen der Regler und den rückgeführten Temperaturen der Masse an den verschiedenen Stellen moduliert. Die Sollwertparameter werden den Reglern der einzelnen Regelstrecken als Sollwerte zugeführt. Dies kann zur Auswahl anderer nachgeordneter Kennfelder führen.

Eine Temperiermaschine zum kontinuierlichen Aufbereiten einer zu verarbeitenden fetthaltigen Masse, insbesondere Schokolademasse, ist mit einer steuerbaren Einrichtung zur Anreicherung der Kristalle in der Masse versehen. Die Einrichtung weist einen Masseeinlass und einen Masseauslass sowie Regler für die Temperaturen und Mengen der Masse und der Temperiermedien auf. Es ist eine Regeleinrichtung für die Beeinflussung des Temperiergrads vorgesehen. Die Regeleinrichtung weist einen Temperiergradregler sowie einen Prozessor auf. In einer weiteren Ausführungsform wird die Funktion des Prozessors von einer Auswahlmatrix und einem oder mehreren Kennfeldern erbracht. Die Regeleinrichtung weist immer einen Eingang für die Eingabe eines gewünschten Temperiergradsollwerts und einen weiteren Eingang für die Eingabe eines ermittelten Temperiergradistwerts sowie einen Ausgang für Sollwertparameter aus dem Prozessor oder den Kennfeldern auf. Dem Ausgang des Temperiergradreglers der Regeleinrichtung sind der Prozessor oder die Auswahlmatrix mit den nachgeordneten Kennfeldern nachgeschaltet, die aus der Auswahlgröße Sollwertparameter bilden. Der Temperiergradregler kann insbesondere als PID-Regler ausgebildet sein.

Es ist eine Messeinrichtung für die Ermittlung des Temperiergradistwerts der temperierten Masse vorgesehen, die mit dem Eingang für den Temperiergradistwert an dem Temperiergradregler der Regeleinrichtung in Verbindung steht. Die Messeinrichtung ist zweckmäßig als in regelmäßigen Zeitabständen eine Messung des Temperiergrads (Temperiergradistwert) der temperierten Masse durchführende Einrichtung ausgebildet und ausgangsseitig zu oder an der Temperiermaschine in die Ausgangsleitung für die temperierte Masse zu einer nachgeschalteten Verarbeitungsmaschine eingeschaltet. Es ist aber auch möglich, einzelne Proben der temperierten Masse aus der Ausgangsleitung oder auch noch aus der Verarbeitungsmaschine zu entnehmen und den Temperiergrad in einer gesonderten Messeinrichtung festzustellen. Der Temperiergradistwert muss dann in den Temperiergradregler eingegeben werden. Unter dem Begriff "Temperiergrad" - manchmal auch als "Temperierindex" bezeichnet - wird ein Indikator für die Menge der Kristalle in der temperierten Masse verstanden. Die Temperatur der Masse am Wendepunkt Ihrer Abkühlkurve kann einen Hinweis auf die Temperierqualität geben. Die Steigung der Abkühlkurve am Wendepunkt entspricht dem Temperiergrad. Eine positive Steigung kennzeichnet eine untertemperierte Masse. Eine negative Steigung kennzeichnet eine übertemperierte Masse. Eine Steigung im Bereich Null kennzeichnet in der Regel eine gut temperierte Masse.

Die Regeleinrichtung weist vorzugsweise einen zweiten Eingang für die Eingabe der Art der zu temperierenden Masse und/oder einen dritten Eingang für die Eingabe der Menge der zu temperierenden Masse auf. Unter der "Art der Masse" werden die Eigenschaften der betreffenden Masse, insbesondere ihr Fettanteil, verstanden, bei Schokolademasse beispielsweise dunkle oder helle Schokolademasse. Die "Menge" der zu temperierenden Masse entspricht dem gewünschten Durchsatz an Masse durch die Temperiermaschine pro Zeiteinheit, so wie es die nachgeschalteten Verarbeitungsmaschinen, insbesondere Überziehmaschinen, erfordern. Unter dem Begriff der "Eingabe" kann eine Sollwerteingabe oder die Eingabe einer gemessenen Größe verstanden werden.

Die Regeleinrichtung weist vorzugsweise eine Auswahlmatrix und nachgeordnete Kennfelder auf. Die Auswahlmatrix stellt bereit bzw. beinhaltet Auswahlparameter für die nachgeordneten Kennfelder der Regeleinrichtung in Abhängigkeit von der Auswahlgröße des Temperiergradreglers sowie der Art der zu temperierenden Masse und der Menge der zu temperierenden Masse. Die nachgeordneten Kennfelder stellen bereit bzw. beinhalten Sollwertparameter für die Regler für die Temperaturen und Mengen der Masse und der Temperiermedien in Abhängigkeit von den Auswahlparametern.

Die Regeleinrichtung kann nachgeordnete Kennfelder für die Ausgabe von Sollwertparametern für die Bereitstellung konstanter Eingangsbedingungen der Masse und der Temperiermedien am Eingang der Temperiermaschine aufweisen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste beispielhafte Ausführungsform der Temperiermaschine mit einer einen Prozessor aufweisenden Regeleinrichtung.
- **Fig. 2**: zeigt eine zweite beispielhafte Ausführungsform der Temperiermaschine mit einer eine Auswahlmatrix und nachgeordnete Kennfelder aufweisenden Regeleinrichtung.
- **Fig. 3**: zeigt ein einzelnes Kennfeld oder Kennfeldpaket in mehrdimensionaler Ausbildung und dessen Eingangs- und Ausgangsgrößen.

### FIGURENBESCHREIBUNG

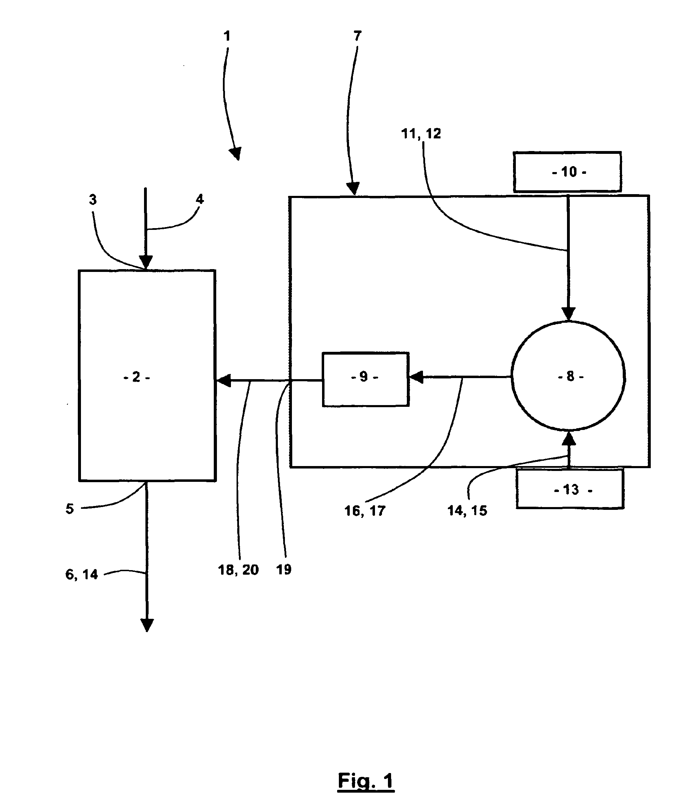

**Fig. 1** zeigt symbolhaft eine Temperiermaschine 1, die - wie eingangs beschrieben wurde - in ganz verschiedener Weise ausgebildet sein kann. Die Temperiermaschine 1 weist eine steuerbare Einrichtung 2 zur Anreicherung der Kristalle in der Masse auf. Die Einrichtung 2 besitzt einen Masseeinlass 3 für untemperierte Masse 4 und einen Masseauslass 5 für temperierte Masse 6.

Die Temperiermaschine 1 weist als weiteren Bestandteil eine Regeleinrichtung 7 auf. Wesentlicher Bestandteil der Regeleinrichtung 7 ist ein Temperiergradregler 8, der vorzugsweise als PID-Regler ausgebildet ist. Weiterer Bestandteil der Regeleinrichtung 7 ist ein Prozessor 9. Darüber hinaus besitzt die Regeleinrichtung 7 einen Eingang 10, der mit einer Einstellvorrichtung verbunden ist oder eine solche aufweist, mit der ein Temperiergradsollwert 11 in die Regeleinrichtung 7 eingegeben werden kann. Die Einstellvorrichtung am Eingang 10 kann als analoge oder digitale Einrichtung ausgebildet sein. Es ist auch möglich, hier einen gemessenen Wert einzugeben. Der eingegebene Temperiergradsollwert 11 wird über eine Leitung 12 dem Temperiergradregler 8 zugeführt.

Die Regeleinrichtung 7 weist weiterhin einen weiteren Eingang 13 für die Eingabe eines Temperiergradistwerts 14 auf, der über eine Leitung 15 dem Temperiergradregler 8 zugeführt wird. Auch der Eingang 13 ist mit einer Eingabevorrichtung versehen, mit der Zahlenwerte oder aber auch gemessene Werte eingegeben werden können. Der Temperiergradregler 8 verarbeitet den Temperiergradsollwert 11 und den Temperiergradistwert 14, insbesondere unter Bildung einer Differenz, und gibt eine Auswahlgröße 16 ab, die über eine Leitung 17 dem Prozessor 9 zugeführt wird. Im Prozessor 9 ist eine Vielzahl von Informationen, Funktionen und Be- und Verarbeitungsvorschriften gespeichert. Der Prozessor bildet aus der Auswahlgröße 16 ein oder mehrere Sollwertparameter 18. Die Regeleinrichtung 7 weist einen Ausgang 19 auf, über die vermittels einer Leitung 20 der oder die Sollwertparameter der Einrichtung 2 zugeführt werden.

### Die Temperiermaschine 1 gemäß Fig. 1 wird wie folgt betrieben:

Am Eingang 10 wird der gewünschte Temperiergrad, den die temperierte Masse 6 erhalten soll, in Form des Temperiergradsollwerts 11 eingegeben. Da zu diesem Zeitpunkt noch keine temperierte Masse vorliegt, bildet der Temperiergradregler 8 entsprechend dem eingegebenen Temperiergradsollwert 11 eine Auswahlgröße 16, die im Prozessor 9 verarbeitet wird. Der Prozessor 9 bildet ausgangsseitig die Sollwertparameter 18, die der Einrichtung 2, also insbesondere den dort vorhandenen verschiedenen Reglern zugeführt werden. Entsprechend dieser vorgenommenen Einstellung wird die untemperierte Masse 4 mit Kristallen angereichert und es entsteht die temperierte Masse 6. Die temperierte Masse 6 wird hinsichtlich des erreichten Temperiergrads untersucht und es wird der Temperiergradistwert 14 festgestellt, der am Eingang 13 über die Leitung 15 dem Temperiergradregler 8 zugeführt wird. Die Ermittlung des Temperiergradistwerts 14 kann auf ganz verschiedene Weise erfolgen, beispielsweise unter Anwendung bekannter Vorrichtungen, die zur Ermittlung des Temperiergrads ausgebildet sind. Es können also Proben genommen und diese Proben untersucht und der Temperiergradistwert 14 festgestellt werden. Der Temperiergradregler 8 bildet aus dem eingegebenen Temperiergradsollwert 11 und dem zugeführten Temperiergradistwert 14 eine Differenz und hieraus unter Modulation mit weiteren Einflussgrößen die Auswahlgröße 16. Diese Auswahlgröße 16 wird von der zu Beginn des Betriebs weitergegebenen Auswahlgröße 16 abweichen, so dass auch der Prozessor 9 modulierte Sollwertparameter 18 für die Einrichtung 2 bereitstellt. Aufgrund dieser veränderten Einwirkung wird die temperierte Masse 6 einen wiederum anderen abweichenden Temperiergradistwert 14 einnehmen, mit welchem ebenso verfahren wird, wie vorher beschrieben. Die aufgezeigten Schritte werden wiederholt, bis der Temperiergradistwert 14 mit dem eingangs eingestellten Temperiergradsollwert 11 übereinstimmt. Die weitere Regelung erfolgt so, dass konstante Verhältnisse entstehen.

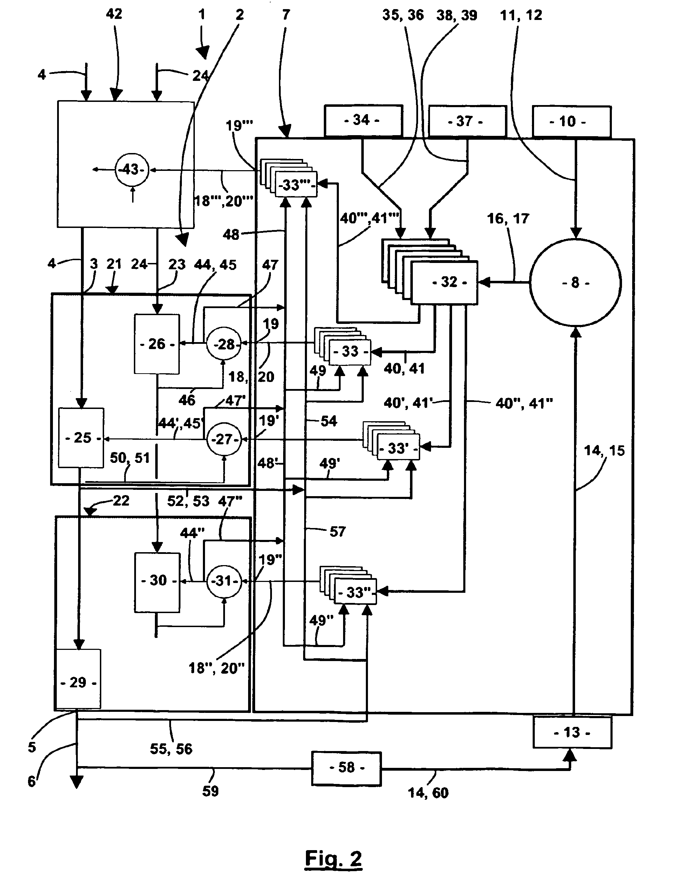

**Fig. 2** zeigt eine Temperiermaschine 1 in einer weiteren Ausführungsform, bei der zusätzlich noch mehrere Einzelheiten dargestellt und verdeutlicht sind. Grundsätzlich weist die Temperiermaschine 1 auch hier die steuerbare Einrichtung 2 zur Anreicherung bzw. Bildung von Kristallen auf. Auch die Regeleinrichtung 7 findet sich hier, wenngleich auch in anderer Ausführung bzw. in detaillierterer Darstellung wieder. Die Einrichtung 2 besitzt eine Kühlstufe 21 und eine Nachwärmstufe 22. Die Kühlstufe 21 weist den Masseeinlass 3 für die untemperierte Masse 4 auf. An der Kühlstufe 21 ist weiterhin eingangsseitig ein Eingang 23 für ein Temperiermedium 24, in der Regel Kühlwasser, vorgesehen. In der Kühlstufe 21 ist weiterhin eine Regelstrecke 25 für die Massetemperatur und eine Regelstrecke 26 für die Wassertemperatur bzw. Temperatur des Kühlmediums vorgesehen. Der Regelstrecke 25 für die Masse ist ein Regler 27 und der Regelstrecke 26 für das Wasser ein Regler 28 zugeordnet. Die Regelstrecken 26 und 27 sowie die zugehörigen Regler 27 und 28 sind in bekannter Weise ausgebildet, so dass auf eine nähere Beschreibung an dieser Stelle verzichtet werden kann.

Die Nachwärmstufe 22 besitzt eine Regelstrecke 29 für die Massetemperatur. Die Regelstrecke 29 ist genau genommen eine Steuerstrecke, da hier ein zugeordneter Regler fehlt. Weiterhin ist auch in der Nachwärmstufe 22 eine Regelstrecke 30 für die Wassertemperatur bzw. die Temperatur des Kühlmediums vorgesehen. Der Regelstrecke 30 für das Wasser ist ein Regler 31 zugeordnet. Die Elemente in der Kühlstufe 21 und in der Nachwärmstufe 22 sind in bekannter Weise ausgebildet.

Die in Fig. 2 dargestellte Regeleinrichtung greift zunächst hinsichtlich der Anordnung, Ausbildung und des Betriebs des Temperaturgradreglers 8 auf die Ausführungsform von Fig. 1 zurück. Die Funktion des Prozessors 9 der Ausführungsform der Fig. 1 wird bei der Ausführungsform der Fig. 2 von einer Auswahlmatrix 32 und nachgeordneten Kennfeldern 33, 33', 33" und 33"' erbracht. Sowohl die Auswahlmatrix 32 wie auch die Kennfelder 33 sind vorzugsweise mehrdimensional ausgebildet, was durch die pakethafte Darstellung verschiedener Ebenen in der Zeichnung verdeutlicht wird. Es kann sich dabei durchaus um die Realisierung von mindestens zwei bis sechs Ebene handeln. In der Auswahlmatrix 32 wie auch in den Kennfeldern 33 sind mathematische Zusammenhänge, Funktionen, Tabellen, Abhängigkeitskurven und dergleichen gespeichert, die jeweils entsprechend angesteuert, ausgewählt und verarbeitet werden. Der Auswahlmatrix 32 wird über die Leitung 17 auch hier die von dem Temperiergradregler 8 gebildete Auswahlgröße 16 zugeleitet. Die Regeleinrichtung 7 weist neben dem Eingang 10 einen weiteren Eingang 34 für die Einstellung der gewünschten Durchsatzmenge an temperierter Masse 6 auf, wie es eine nachgeschaltete, hier nicht dargestellte Verarbeitungsmaschine erfordert. Das Signal entsprechend der Einstellung der Menge 35 wird über eine Leitung 36 der Auswahlmatrix 32 zur Verfügung gestellt. Weiterhin ist ein Eingang 37 vorgesehen, an welchem die Art 38 der Masse, beispielsweise ob es sich um helle oder dunkle Schokolade handelt, eingestellt werden kann. Das Signal betreffend die Art 38 wird über eine Leitung 39 in die Auswahlmatrix 32 eingegeben. Die Auswahlmatrix 32 generiert Auswahlparameter 40, die über Leitungen 41 an die Kennfelder 33 weitergeleitet werden. Die Kennfelder 33 generieren aus den Auswahlparametern 40 die Sollwertparameter 18, die über die Ausgänge 19 den jeweiligen Reglern bzw. Regelstrecken zugeführt werden. So werden bezüglich der Nachwärmstufe 22 der oder die Auswahlparameter 40" dem Kennfeld 33" zugeführt. Das Kennfeld 33" moduliert und bildet den oder die Sollwertparameter 18", die über die Leitung 22" dem Regler 31 der Regelstrecke 30 zugeführt werden. Entsprechendes gilt für die anderen Kennfelder 33, 33' und 33"'.

Die Ausführungsform der Fig. 2 weist insofern noch eine Besonderheit auf, als hier eine Konditioniereinrichtung 42 als Bestandteil der Temperiermaschine 1 vorgesehen und der Kühlstufe 21 vorgeschaltet ist. Die Konditioniereinrichtung 42 dient dazu, konstante Ausgangsbedingungen für die Masse sowie das Temperiermedium bezüglich Druck, Temperatur und Menge zu schaffen. Zu diesem Zweck besitzt die Konditioniereinrichtung 42 in der Regel mehrere Regler 43, von denen hier der Einfachheit halber nur einer dargestellt ist. Es ist leicht vorstellbar, dass auch hier entsprechende Regelstrecken für die Masse einerseits und das Temperiermedium andererseits vorgesehen sind. Sinnvoll ist es, die Temperatur der Masse 4 auf etwa 45 °C zu halten. Sinnvolle Einstellbedingungen für die Herbeiführung konstanter Ausgangsverhältnisse bezüglich des Temperiermediums, dessen Menge und dessen Temperatur sowie dessen Druck ergeben sich in der Regel nach den örtlichen Voraussetzungen. Die Konditioniereinrichtung 42 kann auch einen Dekristallisator umfassen. Wenn örtlich dafür gesorgt werden kann, dass ohnehin konstante Ausgangsbedingungen vorliegen, kann die Konditioniereinrichtung 42 entfallen.

Der Regler 28 in der Kühlstufe 21, der über die Leitung 20 mit dem Sollwertparameter 18 angesteuert wird, erzeugt ausgangsseitig eine Stellgröße 44, die über eine Leitung 45 der Regelstrecke 26 zugeleitet wird. Am Ausgang der Regelstrecke 26 wird die Temperatur des Temperiermediums 24 ermittelt und der Istwert 46 der Temperatur über eine Leitung in den Regler 28 zurückgeführt. Auf diese Weise entsteht der bekannte Regelkreis zwischen Regler 28 und Regelstrecke 26. Die Stellgröße 44 des Reglers 28 wird über Leitungen 47, 48 und 49 an das mehrdimensional ausgebildete Kennfeld 33 rückgeführt, ebenso an die Kennfelder 33', 33" und 33"'. Entsprechend bildet der Regler 27 die Stellgröße 44', die über die Leitung 45' der Regelstrecke 25 zugeführt wird. Auch die Stellgröße 44' wird über die Leitung 47', die Leitung 48' und die Leitung 49' an das Kennfeld 33' rückgeführt, ebenso an die Kennfelder 33', 33" und 33"'. Entsprechende Rückführungen der Stellgrößen 44 gibt es auch bei dem Regler 31. Dessen Stellgröße 44" wird über die Leitungen 47" und 49" an das Kennfeld 33 rückgeführt, ebenso an die Kennfelder 33', 33" und 33"'. Es gibt auch Rückführungen für den Istwert 50 über Leitungen 51 betreffend die Temperatur der Masse nach der Regelstrecke 25 in der Kühlstufe 21 zum Regler 27 sowie eine entsprechende Rückführung des Istwerts zwischen der Regelstrecke 30 und dem Regler 31.

Weiterhin wird die Temperatur der Masse am Übergang zwischen Kühlstufe 21 und Nachwärmstufe 22 erfasst und der Istwert 52 über Leitungen 53 und 54 zu den Kennfeldern 33, 33', 33" und 33"' rückgeführt. Entsprechendes gilt für die Temperatur der temperierten Masse 6 am Masseauslass 5. Auch hier wird der Istwert 55 über die Leitungen 56 und 57 an die Kennfelder 33, 33', 33" und 33"' rückgeführt.

Die Gesamtanlage der Temperiereinrichtung 1 kann ergänzt sein durch eine Messeinrichtung 58 für die Ermittlung des Temperiergradistwerts 14. Die Messeinrichtung 58 kann in der Ausgangsleitung für die temperierte Masse 6 angeordnet oder mit dieser über eine Leitung 59 verbunden sein. Eine Leitung 60 führt zum Eingang 13 für die automatische Eingabe des Temperiergradistwerts 14 in die Regeleinrichtung 7.

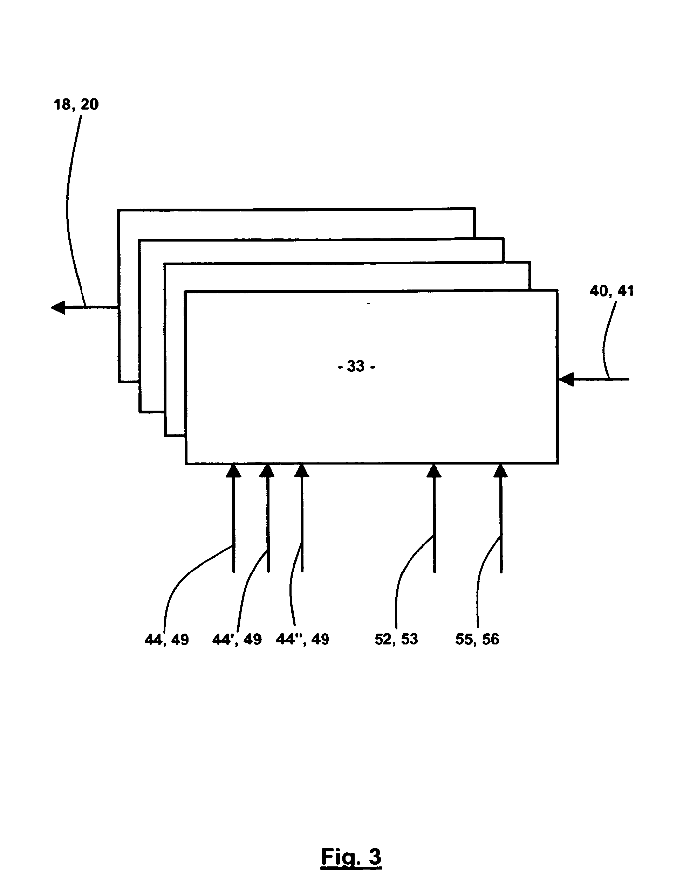

**Fig. 3** zeigt eines der Kennfelder in mehrdimensionaler Ausbildung, und zwar das Kennfeld 33. Durch die pakethafte Darstellung verschiedener Ebenen hintereinander soll zum Ausdruck gebracht werden, dass die mehrdimensionale Ausbildung zwei bis sechs Ebenen umfassen kann, also Ebenen, in denen verschiedene mathematische Zusammenhänge, Funktionen, Kurven usw. gespeichert abrufbar sind. Des Weiteren wird über die Leitung 53 die ermittelte Temperatur der Masse 4 nach der Kühlstufe 21 eingegeben. Über die Leitung 56 wird die Temperatur 55 der temperierten Masse 6 am Ausgang 5 rückgeführt. Über die Leitung 49 werden die Stellgrößen 44, 44', 44" der Regler 27, 28, 31 rückgeführt. Das Kennfeld 33 generiert hieraus Sollwertparameter 18, die über die Leitung 20 dem Regler 28 zugeführt werden. Entsprechendes gilt für die anderen Kennfelder 33', 33" und entsprechend auch 33"'.

### BEZUGSZEICHENLISTE

- 1: Temperiermaschine
- 2: Einrichtung
- 3: Masseeinlass
- 4: untemperierte Masse
- 5: Masseauslass
- 6: temperierte Masse
- 7: Regeleinrichtung
- 8: Temperiergradregler
- 9: Prozessor
- 10: Eingang
- 11: Temperiergradsollwert
- 12: Leitung
- 13: Eingang
- 14: Temperiergradistwert
- 15: Leitung
- 16: Auswahlgröße
- 17: Leitung
- 18: Sollwertparameter
- 19: Ausgang
- 20: Leitung
- 21: Kühlstufe
- 22: Nachwärmstufe
- 23: Eingang
- 24: Temperiermedium
- 25: Regelstrecke Masse
- 26: Regelstrecke Wasser
- 27: Regler
- 28: Regler Masse
- 29: Regelstrecke Masse
- 30: Regelstrecke Wasser
- 31: Regler
- 32: Auswahlmatrix
- 33: Kennfeld
- 34: Eingang
- 35: Menge
- 36: Leitung
- 37: Eingang
- 38: Art
- 39: Leitung
- 40: Auswahlparameter
- 41: Leitungen
- 42: Konditioniereinrichtung
- 43: Regler
- 44: Stellgröße
- 45: Leitung
- 46: Istwert
- 47: Leitung
- 48: Leitung
- 49: Leitung
- 50: Istwert
- 51: Leitung
- 52: Istwert
- 53: Leitung
- 54: Leitung
- 55: Istwert
- 56: Leitung
- 57: Leitung
- 58: Messeinrichtung
- 59: Leitung
- 60: Leitung

## Patentansprüche

1. Verfahren zur Regelung der Kristallisation beim kontinuierlichen Aufbereiten einer zu verarbeitenden fetthaltigen Masse (4), insbesondere Schokolademasse, mittels Temperier-medien (24), mit einer einzelne Regler (27, 28, 31) für die Temperaturen und Mengen der Masse (4) und der Temperiermedien (24) aufweisenden Temperiermaschine (1), mit folgenden Verfahrensschritten:
a) Eingeben eines gewünschten Temperiergradsollwerts (11) in eine Regeleinrichtung (7),
b) Ermitteln des Temperiergradistwerts (14) der temperierten Masse (6),
c) Vergleichen des ermittelten Temperiergradistwerts (14) mit dem gewünschten Temperiergradsollwert (11),
d) Differenzbildung des Temperiergradsollwerts (11) und des Temperiergradistwerts (14) zur Gewinnung einer Auswahlgröße (16),
e) Bereitstellen eines oder mehrerer Sollwertparameter (18) zur Ansteuerung der einzelnen Regler (27, 28, 31 ) für Temperaturen und Mengen der Masse (4) und der Temperiermedien (24) in Abhängigkeit von der Auswahlgröße (16) aus einem Prozessor (9),
f) Aufgeben der Sollwertparameter (18) auf den oder die betreffenden Regler (27, 28, 31) für die Temperaturen und die Mengen der Masse (4) und der Temperiermedien (24),
g) Wiederholen der Schritte b) bis f) bis Übereinstimmung des gewünschten Temperiergradsollwerts (11) mit dem ermittelten Temperiergradistwert (14).

2. Verfahren zur Regelung der Kristallisation bei dem kontinuierlichen Aufbereiten einer zu verarbeitenden fetthaltigen Masse (4), insbesondere Schokolademasse, mittels Temperiermedien (24), mit einer einzelne Regler (27, 28, 31) für die Temperaturen und Mengen der Masse (4) und der Temperiermedien (24) aufweisenden Temperiermaschine (1), mit folgenden Verfahrensschritten:
a) Eingeben eines gewünschten Temperiergradsollwerts (11) in eine Regeleinrichtung (7),
b) Auswählen einer Auswahlmatrix (32) durch einen Temperiergradregler (8) der Regeleinrichtung (7) in Abhängigkeit von einer Auswahlgröße (16) und damit von dem eingegebenen gewünschten Temperiergradsollwert (11),
c) Bereitstellen eines oder mehrerer Auswahlparameter (40) durch die Auswahlmatrix (32) in Abhängigkeit von der Auswahlgröße (16) und damit von dem eingegebenen gewünschten Temperiergradsollwert (11),
d) Auswählen eines oder mehrerer Kennfelder (33, 33', etc.) durch die Auswahlmatrix (32) in Abhängigkeit von der Auswahlgröße (16) und damit von dem eingegebenen gewünschten Temperiergradsollwert (11),
e) Bereitstellen eines oder mehrerer Sollwertparameter (18, 18', etc.) zur Ansteuerung der einzelnen Regler (27, 28, 31) für Temperaturen und Mengen der Masse (4) und der Temperiermedien (24) durch die Kennfelder (33, 33', etc.) in Abhängigkeit von dem oder den Auswahlparametern (40, 40', etc.) und damit von dem eingegebenen gewünschten Temperiergradsollwert (11),
f) Ermitteln des Temperiergradistwerts (14) der temperierten Masse (6),
g) Vergleichen des ermittelten Temperiergradistwerts (14) mit dem gewünschten Temperiergradsollwert (11),
h) Differenzbildung des Temperiergradsollwerts (11) und des Temperiergradistwerts (14) zur Gewinnung der Auswahlgröße (16),
i) Aufgeben der Sollwertparameter (18, 18', etc.) auf den oder die betreffenden Regler (27, 28, 31) für die Temperaturen und die Mengen der Masse und der Temperiermedien,
i) Wiederholen der Schritte b) bis i) bis Übereinstimmung des gewünschten Temperiergradsollwerts (11) mit dem ermittelten Temperiergradistwert (14).

3. Verfahren nach Anspruch 1 oder 2, **dadurch gekennzeichnet, dass** am Eingang der Temperiermaschine (1) konstante Eingangsbedingungen der Masse (4) und der Temperiermedien (24) bereitgestellt werden.

4. Verfahren nach Anspruch 1, **dadurch gekennzeichnet, dass** die Grenzen der Stellbereiche der Regler (27, 28, 31) für die Temperaturen und Mengen der Masse und der Temperiermedien (24) überwacht werden.

5. Verfahren nach Anspruch 2, **dadurch gekennzeichnet, dass** die Grenzen der Stellbereiche der Regler (27, 28, 31) für die Temperaturen und Mengen der Masse und der Temperiermedien (24) überwacht werden und in Abhängigkeit von dem Erreichen der Grenzen der Stellbereiche der Regler (27, 28, 31) ein oder mehrere andere Kennfelder (33, 33', etc.) ausgewählt werden, die die Sollwertparameter (18, 18', etc.) bereitstellen, die die Grenzen der Stellbereiche der Regler nicht tangieren.

6. Verfahren nach mindestens einem der Ansprüche 2, 3 oder 5, **dadurch gekennzeichnet, dass** die Stellgrößen (44, 44', etc.) einzelner Regler (27; 28; 31) oder aller Regler (27, 28, 31) für die Temperaturen und Mengen der Masse (4) und der Temperiermedien (24) und/oder die Istwerte (50, 55) der Temperaturen der Masse (4) zu den Kennfeldern (33, 33', etc.) rückgeführt werden.

7. Temperiermaschine (1) zum kontinuierlichen Aufbereiten einer zu verarbeitenden fetthaltigen Masse (4), insbesondere Schokolademasse, mittels Temperiermedien (24), insbesondere zum Durchführen des Verfahrens nach mindestens einem der Ansprüche 1, 3 oder 4, mit
einer steuerbaren Einrichtung (2) zur Anreicherung von Kristallen in der Masse (4), die einen Masseeinlass (3) und einen Masseauslass (5) sowie Regler (27, 28, 31) für die Temperaturen und Mengen der Masse (4) und der Temperiermedien (24) aufweist, **gekennzeichnet durch**
eine Regeleinrichtung (7) für die Beeinflussung des Temperiergrads, die einen Temperiergradregler (8) sowie einen Prozessor (9) aufweist, wobei die Regeleinrichtung (7) einen Eingang (10) für die Eingabe eines gewünschten Temperiergradsollwerts (11) und einen weiteren Eingang (13) für die Eingabe eines ermittelten Temperiergradistwerts (14) sowie einen Ausgang (19) für Sollwertparameter (18, 18', etc.) aus dem Prozessor (9) aufweist,
wobei dem Ausgang (19) des Temperiergradreglers (8) der Regeleinrichtung (7) der Prozessor (9) nachgeschaltet ist, der aus der Auswahlgröße (16) die Sollwertparameter (18, 18', etc.) bildet.

8. Temperiermaschine (1) zum kontinuierlichen Aufbereiten einer zu verarbeitenden fetthaltigen Masse (4), insbesondere Schokolademasse, mittels Temperiermedien (24), insbesondere zum Durchführen des Verfahrens nach mindestens einem der Ansprüche 2, 3, 5 oder 6, mit
einer steuerbaren Einrichtung (2) zur Anreicherung von Kristallen in der Masse (4), die einen Masseeinlass (3) und einen Masseauslass (5) sowie Regler (27, 28, 31) für die Temperaturen und Mengen der Masse (4) und der Temperiermedien (24) aufweist, **gekennzeichnet durch**
eine Regeleinrichtung (7) für die Beeinflussung des Temperiergrads, die einen Temperiergradregler (8) sowie eine Auswahlmatrix (32) und ein oder mehrere Kennfelder (33, 33', etc.) aufweist, wobei die Regeleinrichtung (7) einen Eingang (10) für die Eingabe eines gewünschten Temperiergradsollwerts (11) und einen weiteren Eingang (13) für die Eingabe eines ermittelten Temperiergradistwerts (14) sowie einen Ausgang (19) für Sollwertparameter (18, 18', etc.) aus den Kennfeldern (33, 33', etc.) aufweist,
wobei dem Ausgang (19) des Temperiergradreglers (8) der Regeleinrichtung (7) die Auswahlmatrix (32) mit den nachgeordneten Kennfeldern (33, 33', etc.) nachgeschaltet ist, die aus der Auswahlgröße (16) die Sollwertparameter (18, 18', etc.) bilden.

9. Temperiermaschine (1) nach Anspruch 7 oder 8, **dadurch gekennzeichnet, dass** eine Messeinrichtung (58) für die Ermittlung des Temperiergradistwerts (14) der temperierten Masse (6) vorgesehen ist, die mit dem Eingang (13) für den Temperiergradistwert (14) an dem Temperiergradregler (8) der Regeleinrichtung (7) in Verbindung steht.

10. Temperiermaschine (1) nach mindestens einem der Ansprüche 7 bis 9, **dadurch gekennzeichnet, dass** die Regeleinrichtung (7) einen zweiten Eingang (37) für die Eingabe der Art (38) der zu temperierenden Masse (4) und/oder einen dritten Eingang (34) für die Eingabe der Menge (35) der zu temperierenden Masse (4) aufweist.

11. Temperiermaschine (1) nach mindestens einem der Ansprüche 7, 9 oder 10, **dadurch gekennzeichnet, dass** die Auswahlmatrix (32) in Abhängigkeit von der Auswahlgröße (16) des Temperiergradreglers (8) sowie der Art (38) der zu temperierenden Masse (4) und der Menge (35) der zu temperierenden Masse (4) Auswahlparameter (40, 40', etc.) für die nachgeordneten Kennfelder (33, 33', etc.) der Regeleinrichtung (7) bereitstellt, während die nachgeordneten Kennfelder (33, 33', etc.) in Abhängigkeit von den Auswahlparametern (40, 40', etc.) Sollwertparameter (18, 18') für die Regler (27, 28, 31) für die Temperaturen und Mengen der Masse (4) und der Temperiermedien (24) bereitstellen.

12. Temperiermaschine (1) nach mindestens einem der Ansprüche 7, 9, 10 oder 11, **dadurch gekennzeichnet, dass** die Regeleinrichtung (7) ein nachgeordnetes Kennfeld (33"') für die Ausgabe von Sollwertparametem (18"') für die Bereitstellung konstanter Eingangsbedingungen der Masse (4) und der Temperiermedien (24) am Eingang der Temperiermaschine (1) aufweist.

## Claims

1. A method of controlling crystallisation during continuous preparation of a fat containing mass (4) to be processed, especially a chocolate mass, by tempering media (24), with a tempering machine (1) including separate controllers (27, 28, 31) for the temperatures and the quantities of the mass (4) and of the tempering media (24), comprising the following method steps of:
a) entering a desired nominal value (11) of the tempering degree in a control device (7),
b) determining the actual value (14) of the tempering degree of the tempered mass (6),
c) comparing the determined actual value (14) of the tempering degree with the desired nominal value (11) of the tempering degree,
d) establishing the difference between the nominal value (11) of the tempering degree and of the actual value (14) of the tempering degree to create a selection variable (16),
e) providing one or more nominal value parameters (18) for controlling the separate controllers (27, 28, 31) for the temperatures and the quantities of the mass (4) and of the tempering media (24) in dependence on the selection variable (16) from a processor (9),
f) submitting the actual value parameter (18) to the one or more controllers (27, 28, 31) concerned for the temperatures and the amounts of the mass (4) and of the tempering media (24),
g) repeating steps b) to f) until the desired nominal value (11) of the tempering degree matches the determined actual value (14) of the tempering degree.

2. A method of controlling crystallisation during continuous preparation of a fat containing mass (4) to be processed, especially a chocolate mass, by tempering media (24), with a tempering machine (1) including separate controllers (27, 28, 31) for the temperatures and the quantities of the mass (4) and of the tempering media (24), comprising the following method steps of:
a) entering a desired nominal value (11) of the tempering degree in a control device (7),
b) selecting a selection matrix (32) by a tempering degree controller (8) of the control device (7) in dependence on a selection value (16) and thus on the entered desired nominal value (11) of the tempering degree,
c) providing one or more selection parameters (14) by the selection matrix (32) in dependence on the selection value (16) and thus on the entered desired nominal value (11) of the tempering degree,
d) selecting one or more characteristic maps (33, 33', etc.) by the selection matrix (32) in dependence on the selection value (16) and thus the entered desired nominal value (11) of the tempering degree,
e) providing one or more nominal value parameters (18, 18', etc.) for controlling the separate controllers (27, 28, 31) for the temperatures and the quantities of the mass (4) and of the tempering media (24) by the characteristic maps (33, 33', etc.) in dependence on the one or more selection parameters (40, 40', etc.) and thus the entered desired nominal value (11) of the tempering degree,
f) determining the actual value (14) of the tempering degree of the tempered mass (6),
g) comparing the determined actual value (14) of the tempering degree with the desired nominal value (11) of the tempering degree,
h) establishing the difference between the nominal value (11) of the tempering degree and of the actual value (14) of the tempering degree to create the selection variable (16),
i) submitting the actual value parameters (18, 18', etc.) to the one or more controllers (27, 28, 31) concerned for the temperatures and the quantities of the mass and of the tempering media,
i) repeating steps b) to i) until the desired nominal value (11) of the tempering degree matches the determined actual value (14) of the tempering degree.

3. The method of claim 1 or 2, **characterised in that** constant inlet conditions of the mass (4) and of the tempering media (24) are provided at the inlet of the tempering machine (1).

4. The method of claim 1, **characterised in that** the limits of the adjusting ranges of the controllers (27, 28, 31) for the temperatures and the quantities of the mass and of the tempering media (24) are observed.

5. The method of claim 2, **characterised in that** the limits of the adjusting ranges of the controllers (27, 28, 31) for the temperatures and the quantities of the mass and of the tempering media (24) are observed and one or more other characteristic maps (33, 33', etc.) are selected in dependence on reaching the limits of the adjusting ranges of the controllers (27, 28, 31), the characteristic maps (33, 33', etc.) providing the nominal value parameters (18, 18', etc.) not affecting the adjusting ranges of the controllers.

6. The method of at least one of claims 2, 3 or 5, **characterised in that** the correcting variables (44, 44', etc.) of some of the controllers (27; 28; 31) or of all controllers (27, 28, 31) for the temperatures and the quantities of the mass (4) and of the tempering media (24) and/or the nominal values (50, 55) of the temperatures of the mass (4) are redirected to the characteristic maps (33, 33', etc.).

7. A tempering machine (1) for continuously preparing a fat containing mass (4) to be processed, especially a chocolate mass, by tempering media (24), especially for conducting the method of at least one of claims 1, 3 or 4, comprising:
a controllable unit (2) for accumulation of crystals in the mass (4), the controllable unit (2) including a mass inlet (3) and a mass outlet (5) as well as controllers (27, 28, 31) for the temperatures and the quantities of the mass (4) and of the tempering media (24), **characterised by**
a control unit (7) for influencing the tempering degree, the control unit (7) including a tempering degree controller (8) as well as a processor (9), the control unit (7) including an input (10) for entering a desired nominal value (11) of the tempering degree and another input (13) for entering a determined actual value (14) of the tempering degree as well as an output (19) for nominal value parameters (18, 18', etc.) from the processor (9),
the processor (9) being located downstream of the output (19) of the tempering degree controller (8) of the control unit (7), the processor (9) creating the nominal value parameters (18, 18', etc.) from the selection value (16).

8. A tempering machine (1) for preparing a fat containing mass (4) to be processed, especially a chocolate mass, by tempering media (24), especially for conducting the method of at least one of claims 2, 3, 5 or 6, comprising:
a controllable unit (2) for accumulation of crystals in the mass (4), the controllable unit (2) including a mass inlet (3) and a mass outlet (5) as well as controllers (27, 28, 31) for the temperatures and the quantities of the mass (4) and of the tempering media (24), **characterised by**
a control unit (7) for influencing the tempering degree, the control unit (7) including a tempering degree controller (8) as well a selection matrix (32) and one or more characteristic maps (33, 33', etc.), the control unit (7) including an input (10) for entering a desired nominal value (11) of the tempering degree and another input (13) for entering a determined actual value (14) of the tempering degree as well as an output (19) for nominal value parameters (18, 18', etc.) from the characteristic maps (33, 33', etc.),
the selection matrix (32) with the downstream characteristic maps (33, 33', etc.) being located downstream of the output (19) of the tempering degree controller (8) of the control unit (7), the characteristic maps (33, 33', etc.) creating the nominal value parameters (18, 18', etc.) from the selection value (16).

9. The tempering machine (1) of claim 7 or 8, **characterised in that** a measuring unit (58) for determining the actual value (14) of the tempering degree of the tempered mass (6) is provided, the measuring unit (58) being in connection with the input (13) for the actual value (14) of the tempering degree at the tempering degree controller (8) of the control unit (7).

10. The tempering machine (1) of at least one of claims 7 to 9, **characterised in that** the control unit (7) includes a second input (37) for entering the kind (38) of the mass (4) to be tempered and/or a third input (34) for entering the quantity (35) of the mass (4) to be tempered.

11. The tempering machine (1) of at least one of claims 7, 9 or 10, **characterised in that** the selection matrix (32) provides selection parameters (40, 40', etc.) for the characteristic maps (33, 33', etc.) of the control unit (7) in dependence on the selection value (16) of the tempering degree controller (8) as well as the kind (38) of the mass (4) to be tempered and the amount (35) of the mass (4) to be tempered, while the characteristic maps (33, 33', etc.) provide nominal value parameters (18, 18') for the controllers (27, 28, 31) for the temperatures and the quantities of the mass (4) and of the tempering media (24) in dependence on the selection parameters (40, 40', etc.).

12. The tempering machine (1) of at least one of claims 7, 9, 10 or 11, **characterised in that** the control unit (7) includes a downstream characteristic map (33"') for outputting nominal value parameters (18"') for providing constant inlet conditions of the mass (4) and of the tempering media (24) at the inlet of the tempering machine (1).

## Revendications

1. Procédé pour le réglage de la cristallisation pendant le traitement en continu d'une pâte (4) grasse à traiter, en particulier une pâte de chocolat, au moyen d'agents d'équilibrage de la température (24), avec une machine d'équilibrage de la température (1) comportant différents régulateurs (27, 28, 31) pour les températures et les quantités de la pâte (4) et des agents d'équilibrage de la température (24), ledit procédé comportant les étapes suivantes:
a) entrée d'une valeur de consigne du degré de température équilibrée (11) souhaitée dans un dispositif de réglage (7),
b) détermination de la valeur réelle du degré de température équilibrée (14) de la pâte tempérée (6),
c) comparaison de la valeur réelle du degré de température équilibrée (14) déterminée avec la valeur de consigne du degré de température équilibrée (11) souhaitée,
d) formation de la différence entre la valeur de consigne du degré de température équilibrée (11) et la valeur réelle du degré de température équilibrée (14) en vue d'obtenir une grandeur de sélection (16),
e) mise à disposition d'un ou de plusieurs paramètres de valeur de consigne (18) en vue de l'activation des différents régulateurs (27, 28, 31) pour les températures et les quantités de la pâte (4) et des agents d'équilibrage de la température (24) en fonction de la grandeur de sélection (16) issue d'un processeur (9),
f) application des paramètres de valeur de consigne (18) au ou aux régulateurs (27, 28, 31) concernés pour les températures et les quantités de la pâte (4) et des agents d'équilibrage de la température (24),
g) reprise des étapes b) à f) jusqu'à ce que la valeur de consigne du degré de température équilibrée (11) souhaitée coïncide avec la valeur réelle du degré de température équilibrée (14) déterminée.

2. Procédé pour le réglage de la cristallisation pendant le traitement en continu d'une pâte (4) grasse à traiter, en particulier une pâte de chocolat, au moyen d'agents d'équilibrage de la température (24), avec une machine d'équilibrage de la température (1) comportant différents régulateurs (27, 28, 31) pour les températures et les quantités de la pâte (4) et des agents d'équilibrage de la température (24), ledit procédé comportant les étapes suivantes:
a) entrée d'une valeur de consigne du degré de température équilibrée (11) souhaitée dans un dispositif de réglage (7),
b) sélection d'une matrice de sélection (32) par un régulateur du degré de température équilibrée (8) du dispositif de réglage (7) en fonction d'une grandeur de sélection (16) et donc en fonction de la valeur de consigne du degré de température équilibrée (11) souhaitée entrée,
c) mise à disposition d'un ou de plusieurs paramètres de sélection (40) par la matrice de sélection (32) en fonction de la grandeur de sélection (16) et donc en fonction de la valeur de consigne du degré de température équilibrée (11) souhaitée entrée,
d) sélection d'une ou de plusieurs zones caractéristiques (33, 33', etc.) par la matrice de sélection (32) en fonction de la grandeur de sélection (16) et donc en fonction de la valeur de consigne du degré de température équilibrée (11) souhaitée entrée,
e) mise à disposition d'un ou de plusieurs paramètres de valeur de consigne (18, 18', etc.) en vue de l'activation des différents régulateurs (27, 28, 31) pour les températures et les quantités de la pâte (4) et des agents d'équilibrage de la température (24) par les zones caractéristiques (33, 33', etc.) en fonction du ou des paramètres de sélection (40, 40', etc.) et donc de la valeur de consigne du degré de température équilibrée (11) souhaitée entrée,
f) détermination de la valeur réelle du degré de température équilibrée (14) de la pâte tempérée (6),
g) comparaison de la valeur réelle du degré de température équilibrée (14) déterminée avec la valeur de consigne du degré de température équilibrée (11) souhaitée,
h) formation de la différence entre la valeur de consigne du degré de température équilibrée (11) et la valeur réelle du degré de température équilibrée (14) en vue d'obtenir la grandeur de sélection (16),
i) application des paramètres de valeur de consigne (18, 18', etc.) au ou aux régulateurs (27, 28, 31) concernés pour les températures et les quantités de la pâte (4) et des agents d'équilibrage de la température,
j) reprise des étapes b) à i) jusqu'à ce que la valeur de consigne du degré de température équilibrée (11) souhaitée coïncide avec la valeur réelle du degré de température équilibrée (14) déterminée.

3. Procédé selon la revendication 1 ou 2, **caractérisé en ce qu'**à l'entrée de la machine d'équilibrage de la température (1) sont mises à disposition des conditions d'entrée constantes pour la pâte (4) et les agents d'équilibrage de la température (24).

4. Procédé selon la revendication 1, **caractérisé en ce que** les limites des zones de réglage des régulateurs (27, 28, 31) pour les températures et les quantités de la pâte et des agents d'équilibrage de la température (24) sont surveillées.

5. Procédé selon la revendication 2, **caractérisé en ce que** les limites des zones de réglage des régulateurs (27, 28, 31) pour les températures et les quantités de la pâte et des agents d'équilibrage de la température (24) sont surveillées et en fonction de l'atteinte des limites des zones de réglage des régulateurs (27, 28, 31), une ou plusieurs autres zones caractéristiques (33, 33', etc.) sont sélectionnées, lesquelles mettent à disposition les paramètres de valeur de consigne (18, 18', etc.) qui n'affectent pas les limites des zones de réglage des régulateurs.

6. Procédé selon l'une au moins des revendications 2, 3 ou 5, **caractérisé en ce que** les grandeurs de réglage (44, 44', etc.) de certains régulateurs (27; 28; 31) ou de tous les régulateurs (27, 28, 31) pour les températures et les quantités de la pâte (4) et des agents d'équilibrage de la température (24), et/ou les valeurs réelles (50, 55) des températures de la pâte (4) sont ramenées vers les zones caractéristiques (33, 33', etc.).

7. Machine d'équilibrage de la température (1) pour le traitement en continu d'une pâte (4) grasse à traiter, en particulier une pâte de chocolat, au moyen d'agents d'équilibrage de la température (24), en particulier pour la mise en oeuvre du procédé selon l'une au moins des revendications 1, 3 ou 4, comportant
un dispositif (2) commandable permettant d'enrichir les cristaux dans la pâte (4), lequel comporte une entrée de pâte (3) et une sortie de pâte (5), ainsi que des régulateurs (27, 28, 31) pour les températures et les quantités de la pâte (4) et des agents d'équilibrage de la température (24), **caractérisée par**
un dispositif de réglage (7) pour influer sur le degré de température équilibrée, qui comporte un régulateur du degré de température équilibrée (8), ainsi qu'un processeur (9), ledit dispositif de réglage (7) comportant une entrée (10) pour entrer une valeur de consigne du degré de température équilibrée (11) souhaitée et une autre entrée (13) pour entrer une valeur réelle du degré de température équilibrée (14) déterminée, ainsi qu'une sortie (19) pour les paramètres de valeur de consigne (18, 18', etc.) issus du processeur (9),
le processeur (9), qui forme les paramètres de valeur de consigne (18, 18', etc.) à partir de la grandeur de sélection (16), étant monté en aval de la sortie (19) du régulateur du degré de température équilibrée (8) du dispositif de réglage (7).

8. Machine d'équilibrage de la température (1) pour le traitement en continu d'une pâte (4) grasse à traiter, en particulier une pâte de chocolat, au moyen d'agents d'équilibrage de la température (24), en particulier pour la mise en oeuvre du procédé selon l'une au moins des revendications 2, 3, 5 ou 6, comportant
un dispositif (2) commandable permettant d'enrichir les cristaux dans la pâte (4), lequel comporte une entrée de pâte (3) et une sortie de pâte (5), ainsi que des régulateurs (27, 28, 31) pour les températures et les quantités de la pâte (4) et des agents d'équilibrage de la température (24), **caractérisée par**
un dispositif de réglage (7) pour influer sur le degré de température équilibrée, qui comporte un régulateur du degré de température équilibrée (8), ainsi qu'une matrice de sélection (32) et une ou plusieurs zones caractéristiques (33, 33', etc.), ledit dispositif de réglage (7) comportant une entrée (10) pour entrer une valeur de consigne du degré de température équilibrée (11) souhaitée et une autre entrée (13) pour entrer une valeur réelle du degré de température équilibrée (14) déterminée, ainsi qu'une sortie (19) pour les paramètres de valeur de consigne (18, 18', etc.) issus des zones caractéristiques (33, 33', etc.),
la matrice de sélection (32) avec les zones caractéristiques (33, 33', etc.) subordonnées, qui forment les paramètres de valeur de consigne (18, 18', etc.) à partir de la grandeur de sélection (16), étant monté en aval de la sortie (19) du régulateur du degré de température équilibrée (8) du dispositif de réglage (7).

9. Machine d'équilibrage de la température (1) selon la revendication 7 ou 8, **caractérisé en ce qu'**il est prévu un dispositif de mesure (58) pour déterminer la valeur réelle du degré de température équilibrée (14) de la pâte tempérée (6), lequel est relié à l'entrée (13) pour la valeur réelle du degré de température équilibrée (14) sur le régulateur du degré de température équilibrée (8) du dispositif de réglage (7).

10. Machine d'équilibrage de la température (1) selon au moins l'une des revendications 7 à 9, **caractérisée en ce que** le dispositif de réglage (7) comporte une deuxième entrée (37) pour entrer le type (38) de pâte (4) à tempérer et/ou une troisième entrée (34) pour entrer la quantité (35) de pâte (4) à tempérer.

11. Machine d'équilibrage de la température (1) selon au moins l'une des revendications 7, 9 ou 10, **caractérisée en ce que** la matrice de sélection (32), en fonction de la grandeur de sélection (16) du régulateur du degré de température équilibrée (8), ainsi que du type (38) de pâte (4) à tempérer et de la quantité (35) de pâte (4) à tempérer, met à disposition des paramètres de sélection (40, 40', etc.) pour les zones caractéristiques (33, 33', etc.) subordonnées du dispositif de réglage (7), tandis que les zones caractéristiques (33, 33', etc.) subordonnées, en fonction des paramètres de sélection (40, 40', etc.), mettent à disposition des paramètres de valeur de consigne (18, 18') pour les régulateurs (27, 28, 31) pour les températures et les quantités de la pâte (4) et des agents d'équilibrage de la température (24).

12. Machine d'équilibrage de la température (1) selon au moins l'une des revendications 7, 9, 10 ou 11, **caractérisée en ce que** le dispositif de réglage (7) comporte une zone caractéristique (33"') subordonnée pour l'édition de paramètres de valeur de consigne (18"') pour mettre à disposition des conditions d'entrée constantes de la pâte (4) et des agents d'équilibrage de la température (24) au niveau de l'entrée de la machine d'équilibrage de la température (1).
